# Europäisches Patentamt
## European Patent Office
## Office européen des brevets

(19)

(11) Veröffentlichungsnummer: **0 163 671**
**B1**

(12)

# EUROPÄISCHE PATENTSCHRIFT

(45) Veröffentlichungstag der Patentschrift:
**02.08.89**

(51) Int. Cl.⁴: **B 60 B 33/00**

(21) Anmeldenummer: **84904099.3**

(22) Anmeldetag: **08.11.84**

(86) Internationale Anmeldenummer:
**PCT/DE 84/00236**

(87) Internationale Veröffentlichungsnummer:
**WO 85/02151 (23.05.85 Gazette 85/12)**

(54) VERFAHREN ZUM HERSTELLEN VON LENKROLLEN-SCHWENKLAGERN UND DANACH HERGESTELLTES SCHWENKLAGER.

(30) Priorität: **12.11.83 DE 3341063**

(43) Veröffentlichungstag der Anmeldung:
**11.12.85 Patentblatt 85/50**

(45) Bekanntmachung des Hinweises auf die Patenterteilung:
**02.08.89 Patentblatt 89/31**

(84) Benannte Vertragsstaaten:
**FR NL SE**

(56) Entgegenhaltungen:
**CH-A-245 267**
**DE-A-2 010 844**
**FR-A-2 252 225**
**GB-A-366 664**
**US-A-1 743 255**
**US-A-1 821 642**

(73) Patentinhaber: **Haco- Rollen- Vertrieb GmbH & Co. KG, Am Krupin 15, D-5632 Wermelskirchen- Tente (DE)**

(72) Erfinder: **HAUSSELS, Berthold, Am Krupin 15, D-5632 Wermelskirchen 1 (DE)**

(74) Vertreter: **Sturies, Herbert, Dr. Ing. Dipl.- Phys., Brahmsstrasse 29, D-5600 Wuppertal (DE)**

EP 0 163 671 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

### Technisches Gebiet

Die Erfindung bezieht sich auf die Herstellung und Beschaffenheit von Lenkrollen-Schwenklagern, die aus einem insbesondere geräteseitig zu befestigenden Schwenklagertopf und einer darin zwischen zwei Wälzlagerkränzen unmittelbar schwenkbeweglich gelagerten, insbesondere mit der Lenkrollengabel zu verbindenden Schwenklagerplatte bestehen, wobei der Schwenklagertopf einen Topfboden und eine zylindrische Wandung besitzt, die am offenen Topfende um mehr als 90° nach innen umgebogen ist und den hier liegenden Wälzlagerkranz unmittelbar umgreift, und wobei die Schwenklagerplatte einen größeren Durchmesser als die zwischen dem umgebogenen Topfwandungsrand gelegene Topföffnung besitzt.

### Stand der Technik

Bekannte Lenkrollen-Schwenklager obiger Art, z. B. nach der DE-C-1 605 465 oder dem DE-U-8 228 224, sind von großer Stabilität und Tragfähigkeit. Sie werden in der Weise hergestellt, daß man zunächst die Schwenklagerplatte mit den als Kugeln ausgebildeten Wälzlagerkörpern der beiden Laufkränze in die im wesentlichen zylindrische, jedoch an ihrem einen Ende nach innen umgebogene Topfwandung einlegt und sodann letztere mit ihrem anderen Ende am Schwenklagertopfboden bzw. einer diesen Boden bildenden Befestigungsplatte verschweißt oder in selteneren Fällen, wie z. B. nach dem DE-U-8 022 219, auch vernietet. Danach wird der Schwenklagertopf vielfach noch einer Oberflächenvergütung durch Galvanisieren od. dgl. unterworfen. Wie die Praxis gezeigt hat, führt das nachträgliche Verschweißen oder auch Vernieten der Schwenklager-Topfwandung mit dem -Topfboden nicht selten zu unerwünschtem Materialverzug und dadurch bedingtem zu großem oder zu geringem Lagerspiel zwischen Schwenklagertopf und Schwenklagerplatte. Das wiederum bedingt Laufunregelmäßigkeiten und Schwergängigkeit des Schwenklagers und gibt vor allem auch Veranlassung zu dessen ungleichmäßiger und damit erhöhter Beanspruchung mit entsprechenden Verkürzung der Lebensdauer solcher Lenkrollen-Schwenklager. In ähnlich ungünstiger Weise wirkt sich auch das etwaige nachträgliche Oberflächenveredeln des Schwenklagertopfes, sei es im Tauch- oder Spritzverfahren, auf die Kugellaufeigenschaften des Lagers aus.

## Darstellung der Erfindung

Der Erfindung liegt daher die Aufgabe zugrunde, ein Lenkrollen-Schwenklager der eingangs erwähnten Gattung zu schaffen, das die vorerwähnten Mängel nicht aufweist, vielmehr ohne Werkstoffverzug mit guten Laufeigenschaften und noch größerer Beanspruchbarkeit hergestellt werden kann. Diese Aufgabe wird erfindungsgemäß dadurch gelöst, daß in den mit anfänglich durchweg zylindrisch verlaufender Wandung, also nicht mit einem nach innen gebogenen Rand versehenen Schwenklagertopf zunächst die Wälzlagerkörper und die Schwenklagerplatte eingelegt werden und anschließend die zylindrische Topfwandung an ihrem freien Ende um mehr als 90° nach innen um den hier liegenden Wälzlagerkranz umgebördelt wird. Für die Erfindung ist also wesentlich, daß die insbesondere als Lagerkugeln ausgebildeten Wälzkörper und die Schwenklagerplatte in den entsprechend vorgeformten, noch mit durchgehend zylindrischer Wandung versehenen Schwenklagertopf eingebracht werden und erst danach die Topfwandung an ihrem freien Ende entsprechend weit nach innen umgebördelt wird. Dieses Umbördeln kann mittels entsprechender Bördelwerkzeuge so schonend vorgenommen werden, daß dadurch das ordnungsgemäße Bewegungsspiel und damit die Laufeigenschaften des Schwenklagers nicht beeinträchtigt werden. Insbesondere entfällt dadurch jedweder durch das sonstige nachträgliche Schweißen bedingte Werkstoffverzug. Auch können die Teile des Schwenklagertopfes wie auch die Schwenklagerplatte vor dem Umbördeln bereits oberflächenbehandelt, also etwa galvanisiert sein, weil das dadurch hervorgerufene Aussehen durch das Bördeln ebenfalls nicht beeinträchtigt wird.

Durch die GB-A-366 664 ist ein Lenkrollen-Schwenklager bekannt, das aus einem mit der Lenkrollengabel verbundenen, nach außen offenen, V-förmig profilierten Lagerinnenring, einem ihn umgebenden, die Wandung des geräteseitig zu befestigenden Schwenklagertopfes bildenden, entgegengesetzt V-förmig profilierten Lageraußenring und einem zwischen beiden, sich zu einem nahezu geschlossenen Laufkanal ergänzenden Lagerringen gelegenen Kugelkranz besteht. Vor dem Zusammenbau dieses gattungsfremden Schwenklagers ist das freie Ende der im übrigen konisch verlaufenden Schwenklagertopfwandung zylindrisch gestaltet, so daß der mit der Lenkrollengabel verbundene Lagerinnenring mitsamt den Lagerkugeln in den Schwenklagertopf eingesetzt werden kann und dann erst das freie Ende des Schwenklagertopfrandes nach innen umgebördelt wird. Diese Nachinnenumbördelung erfolgt hier aber lediglich um 45° gegenüber dem konischen Teil der Lagertopfwandung und kann daher verhältnismäßig einfach vorgenommen werden, zumal dabei der wegen Fehlens einer Schwenklagerplatte innen unabgestützte Lagerinnenring gegebenenfalls entsprechend nachgeben kann. Dieses Lenkrollen-Schwenklager ist daher nicht nur von anderer Bauart sondern auch von wesentlich geringerer Stabilität und Tragfähigkeit als ein gattungsgemäß beschaffenes Lenkrollen-Schwenklager.

Bei dem in der erfindungsgemäßen Weise hergestellten Lenkrollen-Schwenklager, das in an sich bekannter Weise mit einem Schwenklagertopf, der einen Boden und eine zylindrische Wandung besitzt, die am offenen Topfende um mehr als 90° nach innen umgebogen ist, und mit einer im Schwenklagertopf zwischen zwei Kugellaufkränzen unmittelbar gelagerten Schwenklagerplatte versehen ist, die einen größeren Durchmesser als die zwischen dem umgebogenen Topfwandungsrand gelegene Topföffnung besitzt, bestehen der Boden und die zylindrische Topfwandung des Schwenklagertopfes aus einem einstückigen, entsprechend geformten Blechteil, insbesondere einem entsprechend gezogenen Stahlblech, wobei der Topfboden entweder durchgehend verläuft oder aber auch mit einer angeformten mittigen Aufsteckbefestigungsöffnung versehen sein kann. Ein derart beschaffener Schwenklagertopf ist von überaus einfacher Beschaffenheit und Herstellbarkeit.

Der Schwenklagertopf kann aber auch in herkömmlicher Weise aus einer den Topfboden bildenden Befestigungsplatte und einer damit verschweißten oder vernieteten zylindrischen Topfwandung bestehen, wobei aber auch in diesem Fall das Einbringen der Schwenklagerplatte und der Laufkugeln in den Schwenklagertopf bei zunächst durchgehend zylindrisch verlaufender Topfwandung erfolgt und dann erst letztere mit dem nach innen umgebogenen Bördelrand versehen wird.

Schließlich kommt man zu einer sehr zweckmäßig und einfach beschaffenen Lenkrollen-Schwenklager-Bauart, wenn beide Kugellaufkränze sowie die Kugeln jeweils gleich große Durchmesser besitzen, letztere innenseitig in am Rand der Schwenklagerplatte übereinander angeordneten Laufnuten und außenseitig einerseits in der vom Bördelrand gebildeten Bördelnut sowie andererseits in einer im Schwenklagertopfboden wandnah ausgeformten Ringnut geführt sind.

**Beschreibung der Zeichnungen**

In den Zeichnungen sind mehrere Ausführungsbeispiele erfindungsgemäß hergestellter und beschaffener Lenkrollen-Schwenklager dargestellt. Dabei zeigen:

Fig. 1 eine erste Ausführungsform mit einstückig beschaffenem Schwenklagertopf in senkrechtem Schnitt,

Fig. 2 eine zweite Ausführungsform ähnlich der Fig. 1, jedoch mit einem eine Aufsteckbefestigungsöffnung aufweisenden Topfboden,

Fig. 3 eine dritte Ausführungsform eines Schwenklagers mit zweiteilig beschaffenem Schwenklagertopf in senkrechtem Schnitt,

Fig. 4 die zu Fig. 3 gehörige Aufsicht in Pfeilrichtung A und

Fig. 5 eine mit dem Schwenklagertopf nach Fig. 1 ausgerüstete Lenkrolle.

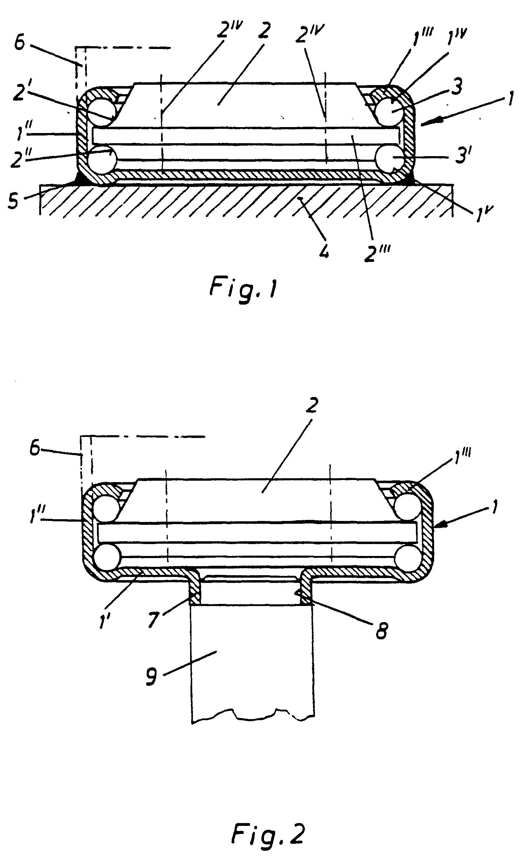

Das in Fig. 1 dargestellte Lenkrollen-Schwenklager besitzt einen Schwenklagertopf 1 mit dem Topfboden 1' und der im wesentlichen zylindrischen Topfwandung 1'', die an ihrem freien Ende mit einem nach innen um mehr als 90° umgebogenen Bördelungsrand 1''' versehen ist. Der gesamte Schwenklagertopf 1 ist von einstückiger Beschaffenheit. Er besteht vorzugsweise aus entsprechend gezogenem Stahlblech. Innerhalb des Schwenklagertopfes 1 ist die Schwenklagerplatte 2 über die beiden Kugellagerkränze 3, 3' schwenkbeweglich gelagert. Der Durchmesser der Schwenklagerplatte 2 ist größer als der Durchmesser der zwischen dem Bördelungsrand 1''' liegenden Topföffnung. Die Kugellaufkränze 3, 3' sind im Durchmesser gleich groß gehalten, ebenso auch ihre Lagerkugeln. Diese sind innenseitig in den am Rand der Schwenklagerplatte 2 übereinander angeordneten Laufnuten 2' bzw. 2'' geführt, die ober- und unterhalb des nahe bis an die Topfwandung 1'' heranreichenden Randwulstes 2''' liegen. Außenseitig sind die Kugeln der Laufkränze 3''' einerseits in der vom Bördelrand 1''' gebildeten Bördelnut 1$^{IV}$ und andererseits in der in den Topfboden 1' eingeformten, unmittelbar in der Nähe der Topfwandung 1'' gelegenen Ringnut 1$^V$ geführt.

Der Schwenklagertopf 1 ist randseitig mit einer auf dem Rand seines Bodens 1' dicht aufliegenden Befestigungsplatte 4 fest verbunden, beispielsweise über die ringsum laufende Schweißnaht 5. Die Befestigungsplatte 4 kann in bekannter Weise mit dem mit solchen Lenkrollen auszurüstenden verfahrbaren Gerät, z. B. einem Müllbehälter, Gerätewagen, Krankenbett od. dgl. fest verbunden werden. An der Schwenklagerplatte 2 wird über die strichpunktiert angedeuteten Schraubbefestigungslöcher 2$^{IV}$ die das Lenkrollenrad tragende Lenkrollengabel befestigt.

Bei der Herstellung des in Fig. 1 dargestellten Lenkrollen-Schwenklagers besitzt der Schwenklagertopf 1 zunächst eine durchgehend zylindrische Topfwandung, wie das die strichpunktierte Darstellung an der Stelle 6 deutlich macht. In dieser Form wird der Behältertopf 1 zunächst mit der Befestigungsplatte 4 verschweißt und, abweichend von seiner späteren Gebrauchslage, in die in Fig. 1 auf den Kopf gestellte Einfüllposition gebracht, in der also der Topfboden 1 nach oben offen ist. Sodann werden die Lagerkugeln des unteren Laufkranzes 3', danach die Schwenklagerplatte 2 und schließlich die Lagerkugeln des oberen Laufkranzes 3 eingelegt. Zuletzt wird dann mit Hilfe eines entsprechenden Bördelwerkzeuges das freie Ende der Topfwandung 1″ umgebördelt bzw. zum Bördelrand 1‴ verformt. Das Lager ist dann gebrauchsfertig, so daß es über die Lagerplatte 2 mit der Lenkrollengabel und über die Befestigungsplatte 4 mit dem betreffenden Gerät verbunden werden kann.

Das in Fig. 2 dargestellte Lenkrollen-Schwenklager unterscheidet sich von dem in Fig. 1 abgebildeten nur dadurch, daß sein Topfboden 1′ nicht durchgehend verläuft, sondern mit einer mittig angeformten Aufstecknabe 7 versehen ist, in deren Öffnung 8 das entsprechend abgesetzte Ende eines Gerätefußes 9 od. dgl. eingesteckt ist, wobei diese Einsteckbefestigung noch durch andere Mittel, wie z. B. Pressitz, Verschweißen, Verstiften od. dgl. zusätzlich gesichert werden kann. Auch in diesem Falle wird nach vorheriger Befestigung des Lagertopfes 1 auf dem Gerätefuß 9 in der oben beschriebenen Weise verfahren. Es werden also bei noch durchgehend zylindrischer Topfwandung 1″ die Lagerkugeln und die Schwenklagerplatte 2 in den Topf eingelegt und erst dann wird die Wandung 1″ am oberen Rand umgebördelt. Da diese Bördelung in sehr schonender Weise vorgenommen werden kann, tritt dabei weder Werkstoffverzug noch eine gegenseitige Verlagerung der in Eingriff befindlichen Schwenklagerteile ein. Auch eine vorhergehende Oberflächenverbesserung der Schwenklagertopfteile wird durch die abschließende Umbördelung des Randes 1‴ der Topfwand 1″ nicht beeinträchtigt.

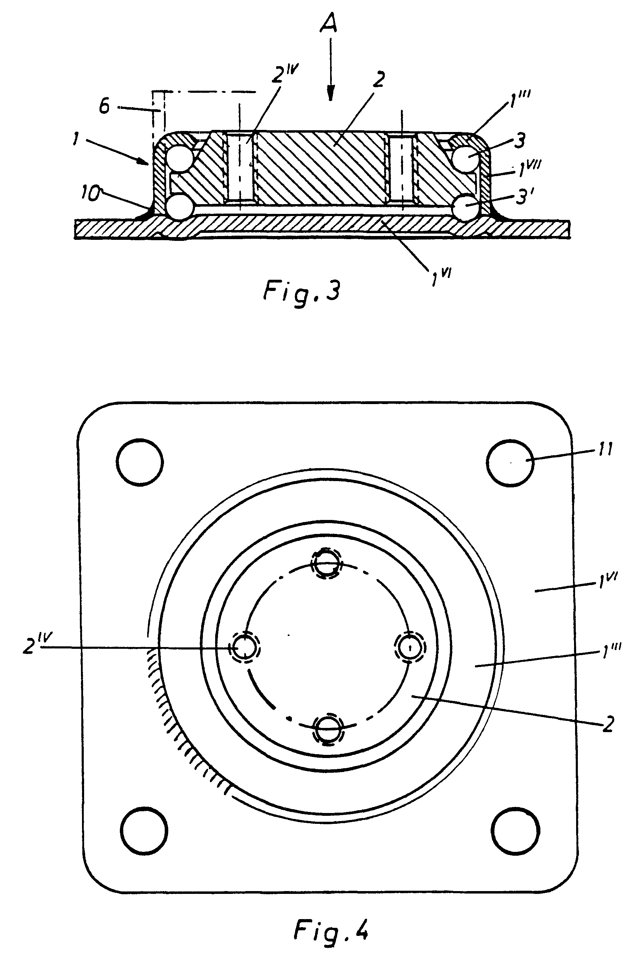

Bei dem in den Fig. 3 und 4 dargestellten Ausführungsbeispiel besteht der Schwenklagertopf 1 aus der seinen Boden bildenden, vergleichsweise starkwandigen Befestigungsplatte 1^VI und der damit durch die Schweißnaht 10 fest verbundenen, zunächst wiederum durchgehend zylindrisch gestalteten Topfwandung 1^VII. Letztere besteht also aus einem einfachen Rohrabschnitt, der auf der mit Schraubbefestigungslöchern 11 versehenen Befestigungsplatte 1^VI aufgeschweißt oder damit gegebenenfalls auch vernietet sein kann. Auch in diesem Falle werden die Lagerkugeln der Laufkränze 3′, 3 und die Schwenklagerplatte 2 in der nach oben offenen in Fig. 3 dargestellten Lage des Schwenklagertopfes 1 in letzteren eingelegt und danach die Behälterwandung 1^VII am oberen Ende eingebördelt, also der Bördelrand 1‴ gebildet. In diesem wie auch in allen vorher beschriebenen Fällen kann die Umbördelung des Topfwandungsrandes so vorgenommen werden, daß ein optimales Lagerspiel entsteht.

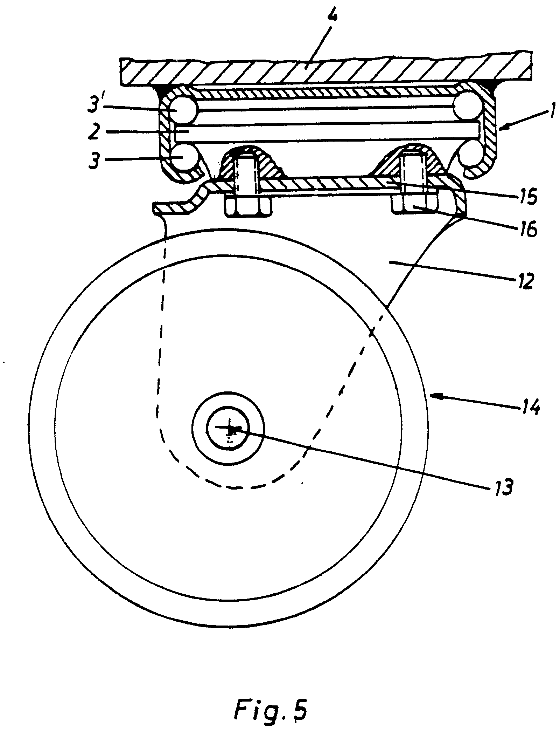

Fig. 5 zeigt eine an einem Schwenklagertopf 1 angebrachte Lenkrolle, deren Gabel 12 das um die Achse 13 drehbare Rollenrad 14 trägt und mittels ihren Rücken 15 durchdringender Schrauben 16 an der Schwenklagerplatte 2 befestigt ist.

## Patentansprüche

1. Verfahren zum Herstellen von Lenkrollen-Schwenklagern, die aus einem insbesondere geräteseitig zu befestigenden Schwenklagertopf und einer darin zwischen zwei Wälzlagerkränzen unmittelbar schwenkbeweglich gelagerten, insbesondere mit der Lenkrollengabel zu verbindenden Schwenklagerplatte bestehen, wobei der Schwenklagertopf einen Topfboden und eine zylindrische Wandung besitzt, die am offenen Topfende um mehr als 90° nach innen umgebogen ist und den hier liegenden Wälzlagerkranz unmittelbar umgreift, und wobei die Schwenklagerplatte einen größeren Durchmesser als die zwischen dem umbegobenen Topfwandungsrand gelegene Topföffnung besitzt, dadurch gekennzeichnet, daß in den mit anfänglich durchweg zylindrisch verlaufender Wandung, also nicht mit einem nach innen gebogenen Rand versehenen Schwenklagertopf zunächst die Wälzlagerkörper und die Schwenklagerplatte eingelegt werden und anschließend die zylindrische Topfwandung an ihrem freien Ende um mehr als 90° nach innen um den hier liegenden Wälzlagerkranz umgebördelt wird.

2. Nach dem Verfahren des Anspruchs 1 hergestelltes Lenkrollen-Schwenklager mit einem Schwenklagertopf (1), der einen Boden (1′) und eine zylindrische Wandung (1″) besitzt, die am offenen Topfende um mehr als 90° nach innen umgebogen ist, und mit einer im Schwenklagertopf (1) zwischen zwei Kugellaufkränzen (3, 3′) unmittelbar gelagerten Schwenklagerplatte (2), die einen größeren Durchmesser als die zwischen dem umbegobenen Topfwandungsrand (1‴) gelegene Topföffnung besitzt, dadurch gekennzeichnet, daß der Boden (1′) und die zylindrische Wandung (1″) des Schwenklagertopfes (1) aus einem einstückigen, entsprechend geformten Blechteil (1′, 1″) bestehen. (Fig. 1, 2, 5).

3. Lenkrollen-Schwenklager nach Anspruch 2, dadurch gekennzeichnet, daß der Schwenklagertopf (1) einen durchgehenden Topfboden (1′) besitzt.

4. Lenkrollen-Schwenklager nach Anspruch 3, dadurch gekennzeichnet, daß der Schwenklagertopf (1) randseitig mit einer auf dem Rand seines Bodens (1′) aufliegenden Befestigungsplatte (4) verbunden, z. B. verschweißt ist.

5. Lenkrollen-Schwenklager nach Anspruch 2, dadurch gekennzeichnet, daß der Schwenklagertopf (1) einen mit einer angeformten mittigen Aufsteckbefestigungsöffnung (8) versehenen Topfboden (1′) besitzt.

6. Lenkrollen-Schwenklager nach einem der Ansprüche 2 bis 5, dadurch gekennzeichnet, daß beide Kugellaufkränze (3, 3′) sowie ihre Kugeln jeweils gleich große Durchmesser besitzen und letztere innenseitig in am Rand der Schwenklagerplatte (2) übereinander angeordneten Laufnuten (2′, 2″) und außenseitig einerseits in der vom Bördelrand (1‴) gebildeten Bördelnut (1^IV) sowie andererseits in einer im Schwenklagertopfboden (1') wandnah ausgeformten Ringnut (1^V) geführt sind.

## Claims

1. Method for the manufacture of castor wheel swivel bearings which comprise a swivel bearing cup arranged to be secured on the apparatus side in particular and a swivel bearing plate arranged to be connected to the castor wheel fork in particular and mounted in the cup to be directly swivellable between two rolling bearing rings, wherein the swivel bearing cup includes a base and a cylindrical wall which is bent inwardly through more than 90° at the open cup end and which directly engages the rolling bearing ring which is positioned at said open end, and wherein the swivel bearing plate has a larger diameter than that of the cup opening defined by the inturned cup wall margin, characterised in that the rolling bearing members and the swivel bearing plate are first introduced into the swivel bearing cup when provided with an initially straight cylindrical wall, thus not with an inturned margin, and thereafter the cylindrical cup wall is turned over inwardly at its free end through more than 90° about the rolling bearing ring positioned at that free end.

2. Castor roller swivel bearing manufactured according to the method of claim 1, comprising a swivel bearing cup (1) which has a base (1') and a cylindrical wall (1'') which is turned inwardly through more than 90° at the open cup end, and a swivel bearing plate (2) mounted in the swivel bearing cup (1) directly between two ball bearing rings (3, 3'), said plate having a larger diameter than that of the cup opening defined by the inturned cup wall margin (1'''), characterised in that the base (1') and the cylindrical wall (1'') of the swivel bearing cup (1) are made in one piece from appropriately shaped sheet material (1', 1'') (Fig. 1, 2, 5).

3. Castor roller swivel bearing according to claim 2, characterised in that the swivel bearing cup (1) has a continuous base (1').

4. Castor roller swivel bearing according to claim 3, characterised in that the swivel bearing cup (1) is connected, e.g. welded, at its periphery to a securing plate (4) which is in contact with the cup around the edge of its base (1').

5. Castor roller swivel bearing according to claim 2, characterised in that the swivel bearing cup (1) has a base (1') which is provided with a central flanged opening (8) for push-fit mounting of the cup.

6. Castor roller swivel bearing according to one of claims 2 to 5, characterised in that both ball bearing rings (3, 3') and their balls have the same diameter and the latter are guided on the inside in track grooves (2', 2'') arranged above one another in the margin of the swivel bearing plate (2) and are guided on the outside in the one case

in the groove (1^IV) formed by the inturned margin (1''') of the cup edge and in the other case in an annular groove (1^V) formed in the swivel bearing cup base (1') close to the wall.

## Revendications

1. Procédé de fabrication de paliers pivotants pour roulettes orientables, constitués d'un boîtier de palier pivotant destiné à être en particulier fixé du côté de l'objet et d'un plateau de palier pivotant monté de manière à pouvoir pivoter, directement entre deux couronnes de roulement et destiné à être en particulier relié à la chape de roulettes orientables, étant précisé que le boîtier de palier pivotant possède un fond de boîtier et une paroi cylindrique rabattue vers l'intérieur, de plus de 90°, à l'extrémité ouverte du boîtier et enserrant directement la couronne de roulement qu'elle entoure, et étant précisé que le plateau de palier pivotant possède un diamètre supérieur à celui de l'ouverture du boîtier qui est limitée par le bord rabattu de la paroi du boîtier, caractérisé en ce que l'on place tout d'abord les éléments de roulement et le plateau du palier pivotant dans la paroi de forme cylindrique continue au début, c'est-à-dire sans avoir un boîtier de palier pourvu d'un bord rabattu vers l'intérieur, et en ce que l'on rabat ensuite la paroi cylindrique du boîtier, à son extrémité libre, de plus de 90° vers l'intérieur, autour de la couronne du roulement qu'elle entoure.

2. Palier pivotant pour roulettes orientables fabriqué selon le procédé de la revendication 1, comportant un boîtier de palier pivotant (1) possèdant un fond (1') et une paroi cylindrique (1'') rabattue vers l'intérieur de plus de 90° à l'extrémité ouverte du boîtier, et un plateau de palier pivotant (2) disposé dans le boîtier de palier pivotant (1), directement entre deux couronnes de roulements à billes (3, 3') et possèdant un diamètre supérieur à celui de l'ouverture du boîtier qui est limitée par le bord rabattu (1''') de la paroi du boîtier, caractérisé en ce que le fond (1') et la paroi cylindrique (1'') du boîtier de palier pivotant (1) sont constitués d'un élément de tôle d'une seule pièce (1', 1'') formé de façon appropriée.

3. Palier pivotant pour roulettes orientables selon la revendication 2, caractérisé en ce que le boîtier de palier pivotant (1) possède un fond de boîtier (1') continu.

4. Palier pivotant pour roulettes orientables selon la revendication 3, caractérisé en ce que le boîtier de palier pivotant (1) est relié, par exemple soudé, de façon périphérique à une plaque de fixation (4) reposant sur le bord de son fond (1').

5. Palier pivotant pour roulettes orientables selon la revendication 2, caractérisé en ce que le boîtier de palier pivotant (1) possède un fond de boîtier (1') présentant une ouverture de fixation par enfichage (8) formée de manière centrale.

6. Palier pivotant pour roulettes orientables selon l'une des revendications 2 à 5, caractérisé en ce que les deux couronnes de roulement à billes (3, 3'), ainsi que leurs billes, possèdent respectivement des diamètres égaux; et en ce que ces dernières sont guidées intérieurement dans des rainures périphériques (2', 2'') disposées l'une au-dessus de l'autre au bord du plateau de palier pivotant (2) et, extérieurement d'une part dans la rainure rabattue (1^IV) formée par le bord rabattu (1''') ainsi que d'autre part dans une rainure annulaire (1^V) formée près de la paroi, dans le fond (1') du boîtier de palier pivotant.

Fig. 1

Fig.2

1

Fig.3

Fig.4

3

Fig. 5